# EUROPEAN PATENT APPLICATION

(11) **EP 4 742 331 A1**
(43) Date of publication of application: **13.05.2026**
(21) Application number: 25199940.5
(22) Date of filing: 03.09.2025
(51) Int. Cl.: H01M 8/0228, H01M 8/0267, H01M 8/0271, H01M 8/0273, H01M 8/0286

(54) **FUEL CELL AND METHOD FOR MANUFACTURING FUEL CELL**

(30) Priority: 12.11.2024 JP 2024197407
(71) Applicant: TOYOTA JIDOSHA KABUSHIKI KAISHA, Toyota-shi, Aichi-ken 471-8571 (JP)
(72) Inventor: TAKEHIRO, Naoki, Toyota-shi, 471-8571 (JP)
(74) Representative: Kuhnen & Wacker Patent- und Rechtsanwaltsbüro PartG mbB

(57) **Abstract**

A fuel cell includes an anode separator and a cathode separator each including a coating on its surface. Each of the anode and cathode separators includes: a body; a coolant manifold configured to allow a coolant to flow therethrough; an intra-cell sealing portion that provides a seal between the anode and cathode separators within the fuel cell and that is provided by the body being bonded to the insulating sheet so as to surround the coolant manifold; and a sacrificial electrolytic corrosion portion disposed between the coolant manifold and the intra-cell sealing portion and including a plurality of exposed portions where a base material is exposed without being covered with the coating. The sacrificial electrolytic corrosion portion includes at least one of the exposed portions on a straight line connecting the coolant manifold and the intra-cell sealing portion.

## Description

### BACKGROUND OF THE INVENTION

### 1. Field of the Invention

The present disclosure relates to fuel cells and methods for manufacturing a fuel cell.

### 2. Description of Related Art

Conventionally, there has been known a fuel cell including an anode separator and a cathode separator that sandwich a membrane electrode gas diffusion layer assembly and an insulating sheet that holds an outer peripheral portion of the membrane electrode gas diffusion layer assembly (Japanese Unexamined Patent Application Publication No. 2023-168686 (JP 2023-168686 A)). In this fuel cell, each separator includes: a coolant manifold that allows a coolant to flow therethrough; and a sealing portion bonded to the insulating sheet to provide a seal between the anode separator and the cathode separator. Each separator further includes a sacrificial electrolytic corrosion portion. The sacrificial electrolytic corrosion portion is disposed between the coolant manifold and the sealing portion without being bonded to the insulating sheet. Since the sacrificial electrolytic corrosion portion is preferentially electrolytically corroded over the sealing portion, the sealing portion is protected.

### SUMMARY OF THE INVENTION

In order to improve functions such as corrosion resistance, there are cases where separators having a corrosion-resistant coating on their surfaces are manufactured by treating a surface of a base material for the separators. At this time, the separators are sometimes formed by pressing the base material with its surface covered with a coating. In this case, part of the coating may be ruptured by the pressing, and the base material may be partially exposed. If the coating covering the sealing portion ruptures, electrolytic corrosion will progress from the portions where the coating has ruptured. As a result, pinholes may be formed in the sealing portion, which results in degradation in sealing performance.

The present disclosure can be implemented in the following aspects.
(1) An aspect of the present disclosure provides a fuel cell. The fuel cell includes: a plate member including a membrane electrode gas diffusion layer assembly and an insulating sheet that holds an outer peripheral portion of the membrane electrode gas diffusion layer assembly; and an anode separator and a cathode separator that sandwich the plate member. Each of the anode separator and the cathode separator includes a coating on its surface. Each of the anode separator and the cathode separator includes a body, a coolant manifold, an intra-cell sealing portion, and a sacrificial electrolytic corrosion portion. The coolant manifold is an opening in the body, and is configured to allow a coolant to flow therethrough. The intra-cell sealing portion provides a seal between the anode separator and the cathode separator within the fuel cell. The intra-cell sealing portion is provided by the body being bonded to the insulating sheet so as to surround the coolant manifold. The sacrificial electrolytic corrosion portion is disposed between the coolant manifold and the intra-cell sealing portion. The sacrificial electrolytic corrosion portion includes a plurality of exposed portions where a base material is exposed without being covered with the coating. The sacrificial electrolytic corrosion portion includes at least one of the exposed portions on a straight line connecting the coolant manifold and the intra-cell sealing portion. According to this aspect, even when the surface is covered with the coating, the sacrificial electrolytic corrosion portion has more exposed portions than the remaining portions. Therefore, the sacrificial electrolytic corrosion portion can be preferentially electrolytically corroded over the remaining portions. This can reduce formation of pinholes in the intra-cell sealing portion. As a result, degradation in sealing performance can be reduced.
(2) In the above aspect, the sacrificial electrolytic corrosion portion may include the exposed portion on each of two or more concentric circles centered around the coolant manifold. This aspect more reliably allows the sacrificial electrolytic corrosion portion to be preferentially electrolytically corroded over the remaining portions. Accordingly, formation of pinholes in the intra-cell sealing portion can be more reliably reduced. As a result, degradation in sealing performance can be more reliably reduced.
(3) In the above aspect, the sacrificial electrolytic corrosion portion may include the exposed portions at an interval of 10 µm or less. This aspect more reliably allows the sacrificial electrolytic corrosion portion to be preferentially electrolytically corroded over the remaining portions. Accordingly, formation of pinholes in the intra-cell sealing portion can be more reliably reduced. As a result, degradation in sealing performance can be more reliably reduced.
(4) Another aspect of the present disclosure provides a method for manufacturing a fuel cell. The method includes a plate preparation step, a base material preparation step, a surface treatment step, a forming step, and an intra-cell sealing portion forming step. The plate preparation step is a step of preparing a plate member including: (1a) a membrane electrode gas diffusion layer assembly; and (1b) an insulating sheet that holds an outer peripheral portion of the membrane electrode gas diffusion layer assembly. The base material preparation step is a step of preparing a base material for an anode separator and a cathode separator. The base material includes: (2a) a body; (2b) a coolant manifold that is an opening in the body and that is configured to allow a coolant to flow therethrough; and (2c) an embossed portion disposed near the coolant manifold and including a plurality of protrusions protruding from the body. The surface treatment step is a step of treating a surface of the base material to form a coating on the surface of the base material. The forming step is a step of pressing the base material with the coating to form each of the anode separator and the cathode separator into a predetermined shape. The intra-cell sealing portion forming step is a step of forming an intra-cell sealing portion by sandwiching the plate member between the anode separator and the cathode separator and bonding the insulating sheet to the body so as to surround the coolant manifold. The intra-cell sealing portion provides a seal between the anode separator and the cathode separator within the fuel cell. The forming step includes an exposing step. The exposing step is a step of forming a sacrificial electrolytic corrosion portion by stretching the protrusions using an external force applied by the pressing to rupture the coating on the protrusions. The sacrificial electrolytic corrosion portion includes a plurality of exposed portions where the base material is exposed without being covered with the coating. According to this aspect, the separators can be manufactured using the base material having its surface covered with the coating and including the embossed portion having the protrusions between the coolant manifold and the intra-cell sealing portion. In this case, when the separators are formed by pressing the base material having its surface covered with the coating, the protrusions formed on the base material can be stretched by using the external force applied by the pressing. As a result, the coating on the protrusions is ruptured. The sacrificial electrolytic corrosion portion having the exposed portions can thus be formed between the coolant manifold and the intra-cell sealing portion.
(5) In the above aspect, the protrusion may protrude from a surface of the body that faces the insulating sheet toward an opposite surface of the body from the surface that faces the insulating sheet. According to this aspect, the cross-sectional area of a coolant channel can be increased when the coolant channel is formed between the anode separator of one fuel cell and the cathode separator of the adjacent fuel cell by staking a plurality of fuel cells. This can reduce pressure loss that occurs when the coolant flows.
The present disclosure can be implemented in various forms other than the fuel cell and the method for manufacturing a fuel cell. For example, the present disclosure can be implemented in the forms such as a fuel cell stack formed by stacking a plurality of fuel cells and a vehicle equipped with a fuel cell.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a schematic configuration of a fuel cell stack;
FIG. 2 is a flowchart showing a method for manufacturing a fuel cell;
FIG. 3 shows the observation results of cooling surfaces of separators as a reference example;
FIG. 4 shows a detailed configuration of a base material;
FIG. 5 shows a detailed configuration of protrusions;
FIG. 6 shows protruding directions of the protrusions; and
FIG. 7 shows the verification results of the intervals at which exposed portions were formed in sacrificial electrolytic corrosion portions.

### DETAILED DESCRIPTION OF EMBODIMENTS

### A. First Embodiment

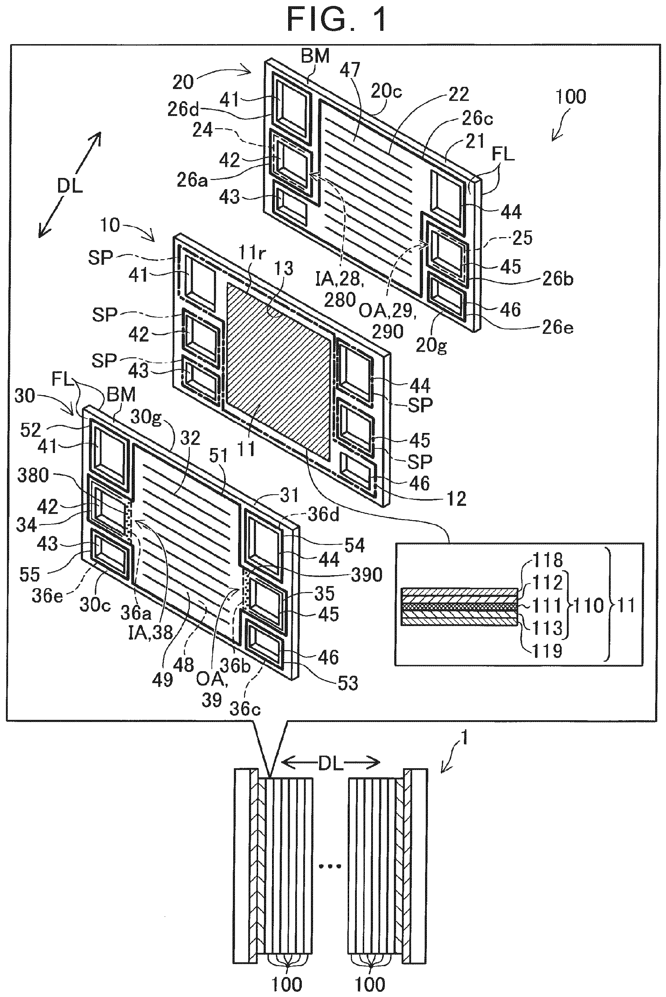

FIG. 1 shows a schematic configuration of a fuel cell stack 1. The fuel cell stack 1 receives a supply of a fuel gas such as hydrogen and an oxidant gas such as air, and generates electricity through an electrochemical reaction. The fuel cell stack 1 has a stack structure in which a plurality of fuel cells 100 is stacked.

Each of the fuel cells 100 includes a plate member 10. The plate member 10 includes a membrane electrode gas diffusion layer assembly (MEGA) 11 and an insulating sheet 12.

The membrane electrode gas diffusion layer assembly 11 includes a membrane electrode assembly (MEA) 110. The membrane electrode assembly 110 includes an electrolyte membrane 111, an anode catalyst layer 112 disposed on one surface of the electrolyte membrane 111, and a cathode catalyst layer 113 disposed on the other surface of the electrolyte membrane 111. The electrolyte membrane 111 selectively allows specific ions to pass therethrough. The anode catalyst layer 112 catalyzes the electrochemical reaction on the anode side. The cathode catalyst layer 113 catalyzes the electrochemical reaction on the cathode side. The membrane electrode gas diffusion layer assembly 11 further includes an anode gas diffusion layer 118 disposed so as to face the anode catalyst layer 112, and a cathode gas diffusion layer 119 disposed so as to face the cathode catalyst layer 113. The anode gas diffusion layer 118 diffuses the fuel gas and supplies it to the anode catalyst layer 112. The cathode gas diffusion layer 119 diffuses the oxidant gas and supplies it to the cathode catalyst layer 113.

The insulating sheet 12 has an opening 13 in its central portion. The insulating sheet 12 is a rectangular frame. An outer peripheral portion 11r of the membrane electrode gas diffusion layer assembly 11 is bonded to the opening 13 of the insulating sheet 12 by an adhesive. The insulating sheet 12 thus holds the outer peripheral portion 11r of the membrane electrode gas diffusion layer assembly 11.

Each of the fuel cells 100 further includes an anode separator 20 and a cathode separator 30 that sandwich the plate member 10 therebetween. The anode separator 20 is disposed so as to face the anode gas diffusion layer 118. The cathode separator 30 is disposed so as to face the cathode gas diffusion layer 119. Each of the separators 20, 30 separates the plate member 10 from the other fuel cells 100. The anode separator 20 has a gas surface 20g and a cooling surface 20c, and the cathode separator 30 has a gas surface 30g and a cooling surface 30c. The gas surfaces 20g, 30g are the surfaces that contact either the fuel gas or the oxidant gas. The cooling surfaces 20c, 30c are the surfaces that contact a coolant, and are the opposite surfaces from the gas surfaces 20g, 30g, respectively. In the present embodiment, the gas surfaces 20g, 30g are the surfaces that face the insulating sheet 12. Each of the cooling surfaces 20c, 30c is the surface that faces another fuel cell 100.

Each of the insulating sheet 12 and the separators 20, 30 includes manifolds 41 to 46 configured to allow fluid to flow therethrough. The manifolds 41 to 46 are openings formed in the insulating sheet 12, a body 21 of the anode separator 20, and a body 31 of the cathode separator 30. The manifolds 41 to 46 in the insulating sheet 12, the anode separator 20, and the cathode separator 30 are formed at such positions that the individual manifolds 41 to 46 align with each other in the stacking direction DL of the fuel cells 100. Accordingly, the fuel gas is distributed to the anode side of the fuel cells 100, the oxidant gas is distributed to the cathode side of the fuel cells 100, and the coolant is distributed between adjacent fuel cells 100. Specifically, the fuel gas is supplied to the fuel gas inlet manifold 44. The fuel gas supplied to the fuel gas inlet manifold 44 is distributed to the anode side of each fuel cell 100 and flows through a fuel gas channel 47 formed between the plate member 10 and the gas surface 20g of the anode separator 20. Of the fuel gas distributed to the anode side, the fuel gas not used for power generation is discharged from the fuel gas outlet manifold 43 to the outside of the fuel cell stack 1. The fuel gas discharged to the outside of the fuel cell stack 1 is supplied again to the fuel gas inlet manifold 44. The oxidant gas is supplied to the oxidant gas inlet manifold 41. The oxidant gas supplied to the oxidant gas inlet manifold 41 is distributed to the cathode side of each fuel cell 100 and flows through an oxidant gas channel 48 formed between the plate member 10 and the gas surface 30g of the cathode separator 30. Of the oxidant gas distributed to the cathode side, the oxidant gas not used for power generation is discharged from the oxidant gas outlet manifold 46 to the outside of the fuel cell stack 1. The oxidant gas discharged to the outside of the fuel cell stack 1 is supplied again to the oxidant gas inlet manifold 41. The coolant that cools the fuel cell 100 is supplied to the coolant inlet manifold 42. The coolant supplied to the coolant inlet manifold 42 is distributed between the fuel cells 100 that are adjacent in the stacking direction DL, and flows through a coolant channel 49 formed between the cooling surface 20c of the anode separator 20 of one of the adjacent fuel cells 100 and the cooling surface 30c of the cathode separator 30 of the other fuel cell 100. The coolant that has flowed between the adjacent fuel cells 100 is discharged from the coolant outlet manifold 45 to the outside of the fuel cell stack 1. The coolant discharged to the outside of the fuel cell stack 1 is supplied again to the coolant inlet manifold 42.

Each of the separators 20, 30 has, on its surface, a coating FL for improving functions such as corrosion resistance. The anode separator 20 includes the body 21, the manifolds 41 to 46, a protruding portion 22, gaskets 51 to 55, ribs 24, 25, intra-cell sealing portions 26a to 26e, and sacrificial electrolytic corrosion portions 28, 29. The cathode separator 30 includes the body 31, the manifolds 41 to 46, a protruding portion 32, gaskets 51 to 55, ribs 34, 35, intra-cell sealing portions 36a to 36e, and sacrificial electrolytic corrosion portions 38, 39.

The protruding portions 22, 32 respectively protrude from the bodies 21, 31 in a direction away from their adjacent fuel cells 100 along the stacking direction DL. The protruding portions 22, 32 are formed by bending the separators 20, 30 by pressing, respectively. The protruding portion 22 of the anode separator 20 and the protruding portion 32 of the cathode separator 30 are formed at such positions that the protruding portions 22, 32 align with each other along the stacking direction DL. Accordingly, the protruding portion 22 forms the fuel gas channel 47 between the plate member 10 and the anode separator 20, and the protruding portion 32 forms the oxidant gas channel 48 between the plate member 10 and the cathode separator 30. The protruding portion 22 forms the coolant channel 49 between the anode separator 20 of the fuel cell 100 and the cathode separator 30 of its adjacent fuel cell 100, and the protruding portion 32 forms the coolant channel 49 between the cathode separator 30 of the fuel cell 100 and the anode separator 20 of its adjacent fuel cell 100.

The gaskets 51 to 55 provide a seal between adjacent fuel cells 100. In the present embodiment, the gaskets 51 to 55 of the anode separator 20 are fixed to the cooling surface 20c by an adhesive etc., and the gaskets 51 to 55 of the cathode separator 30 are fixed to the cooling surface 30c by an adhesive etc. The gaskets 51 to 55 are provided according to the arrangement of the manifolds 41 to 46 and the channels 47 to 49. Specifically, the first gasket 51 is disposed spaced apart from the coolant manifolds 42, 45 so as to surround the coolant manifolds 42, 45 and the coolant channel 49. The first gasket 51 is an inter-cell sealing position that allows the coolant supplied to the coolant inlet manifold 42 to be discharged from the coolant outlet manifold 45 without leaking out of the coolant channel 49. The second gasket 52 is disposed so as to surround the oxidant gas inlet manifold 41. The second gasket 52 is an inter-cell sealing position that does not allow the oxidant gas flowing through the oxidant gas inlet manifold 41 to leak toward the coolant channel 49. The third gasket 53 is disposed so as to surround the oxidant gas outlet manifold 46. The third gasket 53 is an inter-cell sealing position that does not allow the oxidant gas flowing through the oxidant gas outlet manifold 46 to leak toward the coolant channel 49. The fourth gasket 54 is disposed so as to surround the fuel gas inlet manifold 44. The fourth gasket 54 is an inter-cell sealing position that does not allow the fuel gas flowing through the fuel gas inlet manifold 44 to leak toward the coolant channel 49. The fifth gasket 55 is disposed so as to surround the fuel gas outlet manifold 43. The fifth gasket 55 is an inter-cell sealing position that does not allow the fuel gas flowing through the fuel gas outlet manifold 43 to leak toward the coolant channel 49.

The ribs 24, 25, 34, 35 inhibit the flow of the coolant from the coolant manifolds 42, 45 toward the first gasket 51, thereby reducing electrolytic corrosion between the first gasket 51 and the coolant manifolds 42, 45. The ribs 24, 25 are formed on the cooling surface 20c so as to protrude from the body 21, and the ribs 34, 35 are formed on the cooling surface 30c so as to protrude from the body 31. The ribs 24, 34 are provided for the coolant inlet manifold 42, and the ribs 25, 35 are provided for the coolant outlet manifold 45. Specifically, each of the inlet-side ribs 24, 34 is formed between the first gasket 51 and the coolant inlet manifold 42. Each of the outlet-side ribs 25, 35 is formed between the first gasket 51 and the coolant outlet manifold 45.

The intra-cell sealing portions 26a to 26e, 36a to 36e provide a seal between the anode separator 20 and the cathode separator 30 within the fuel cell 100. The intra-cell sealing portions 26a to 26e, 36a to 36e are formed by bonding the bodies 21, 31 to predetermined sealing positions SP on the insulating sheet 12. In the present embodiment, the intra-cell sealing portions 26a to 26e and the intra-cell sealing portions 36a to 36e are respectively formed on the gas surfaces 20g, 30g at positions that overlap part of the first gasket 51 when the respective separators 20, 30 are viewed in the stacking direction DL. The intra-cell sealing portions 26a to 26e, 36a to 36e are formed according to the arrangement of the manifolds 41 to 46 and the channels 47 to 49. The intra-cell sealing portions 26a to 26e and the intra-cell sealing portions 36a to 36e may be respectively formed outward of the first gasket 51 on the gas surfaces 20g, 30g when the respective separators 20, 30 are viewed in the stacking direction DL.

Specifically, the first intra-cell sealing portion 26a of the anode separator 20 is formed so as to surround the coolant inlet manifold 42. The first intra-cell sealing portion 26a of the anode separator 20 is an intra-cell sealing portion that does not allow the coolant flowing through the coolant inlet manifold 42 to leak toward the fuel gas channel 47. The second intra-cell sealing portion 26b of the anode separator 20 is formed so as to surround the coolant outlet manifold 45. The second intra-cell sealing portion 26b of the anode separator 20 is an intra-cell sealing portion that does not allow the coolant flowing through the coolant outlet manifold 45 to leak toward the fuel gas channel 47. The third intra-cell sealing portion 26c of the anode separator 20 is formed so as to surround the fuel gas manifolds 43, 44 and the fuel gas channel 47. The third intra-cell sealing portion 26c of the anode separator 20 is an intra-cell sealing portion that allows the fuel gas supplied to the fuel gas inlet manifold 44 to be discharged from the fuel gas outlet manifold 43 without leaking out of the fuel gas channel 47. The fourth intra-cell sealing portion 26d of the anode separator 20 is formed so as to surround the oxidant gas inlet manifold 41. The fourth intra-cell sealing portion 26d of the anode separator 20 is an intra-cell sealing portion that does not allow the oxidant gas flowing through the oxidant gas inlet manifold 41 to leak toward the fuel gas channel 47. The fifth intra-cell sealing portion 26e of the anode separator 20 is formed so as to surround the oxidant gas outlet manifold 46. The fifth intra-cell sealing portion 26e of the anode separator 20 is an intra-cell sealing portion that does not allow the oxidant gas flowing through the oxidant gas outlet manifold 46 to leak toward the fuel gas channel 47.

The first intra-cell sealing portion 36a of the cathode separator 30 is formed so as to surround the coolant inlet manifold 42. The first intra-cell sealing portion 36a of the cathode separator 30 is an intra-cell sealing portion that does not allow the coolant flowing through the coolant inlet manifold 42 to leak toward the oxidant gas channel 48. The second intra-cell sealing portion 36b of the cathode separator 30 is formed so as to surround the coolant outlet manifold 45. The second intra-cell sealing portion 36b of the cathode separator 30 is an intra-cell sealing portion that does not allow the coolant flowing through the coolant outlet manifold 45 to leak toward the oxidant gas channel 48. The third intra-cell sealing portion 36c of the cathode separator 30 is formed so as to surround the oxidant gas manifolds 41, 46 and the oxidant gas channel 48. The third intra-cell sealing portion 36c of the cathode separator 30 is an intra-cell sealing portion that allows the oxidant gas supplied to the oxidant gas inlet manifold 41 to be discharged from the oxidant gas outlet manifold 46 without leaking out of the oxidant gas channel 48. The fourth intra-cell sealing portion 36d of the cathode separator 30 is formed so as to surround the fuel gas inlet manifold 44. The fourth intra-cell sealing portion 36d of the cathode separator 30 is an intra-cell sealing portion that does not allow the fuel gas flowing through the fuel gas inlet manifold 44 to leak toward the oxidant gas channel 48. The fifth intra-cell sealing portion 36e of the cathode separator 30 is formed so as to surround the fuel gas outlet manifold 43. The fifth intra-cell sealing portion 36e of the cathode separator 30 is an intra-cell sealing portion that does not allow the fuel gas flowing through the fuel gas outlet manifold 43 to leak toward the oxidant gas channel 48.

The sacrificial electrolytic corrosion portions 28, 29 are portions of the cooling surface 20c of the anode separator 20 that are configured to be preferentially electrolytically corroded over the remaining portions, namely the portions other than the sacrificial electrolytic corrosion portions 28, 29. The sacrificial electrolytic corrosion portions 38, 39 are portions of the cooling surface 30c of the cathode separator 30 that are configured to be preferentially electrolytically corroded over the remaining portions, namely the portions other than the sacrificial electrolytic corrosion portions 38, 39. The sacrificial electrolytic corrosion portions 28, 38 are provided for the coolant inlet manifold 42, and the sacrificial electrolytic corrosion portions 29, 39 are provided for the coolant outlet manifold 45. Specifically, the inlet-side sacrificial electrolytic corrosion portions 28, 38 are disposed between the coolant inlet manifold 42 and the intra-cell sealing portions 26a, 36a, respectively. That is, each of the inlet-side sacrificial electrolytic corrosion portions 28, 38 is disposed in a corresponding coolant inlet area IA extending from the coolant inlet manifold 42 toward the membrane electrode gas diffusion layer assembly 11. The outlet-side sacrificial electrolytic corrosion portions 29, 39 are disposed between the coolant outlet manifold 45 and the second intra-cell sealing portions 26b, 36b, respectively. That is, each of the outlet-side sacrificial electrolytic corrosion portions 29, 39 is disposed in a corresponding coolant outlet area OA extending from the membrane electrode gas diffusion layer assembly 11 side toward the coolant outlet manifold 45.

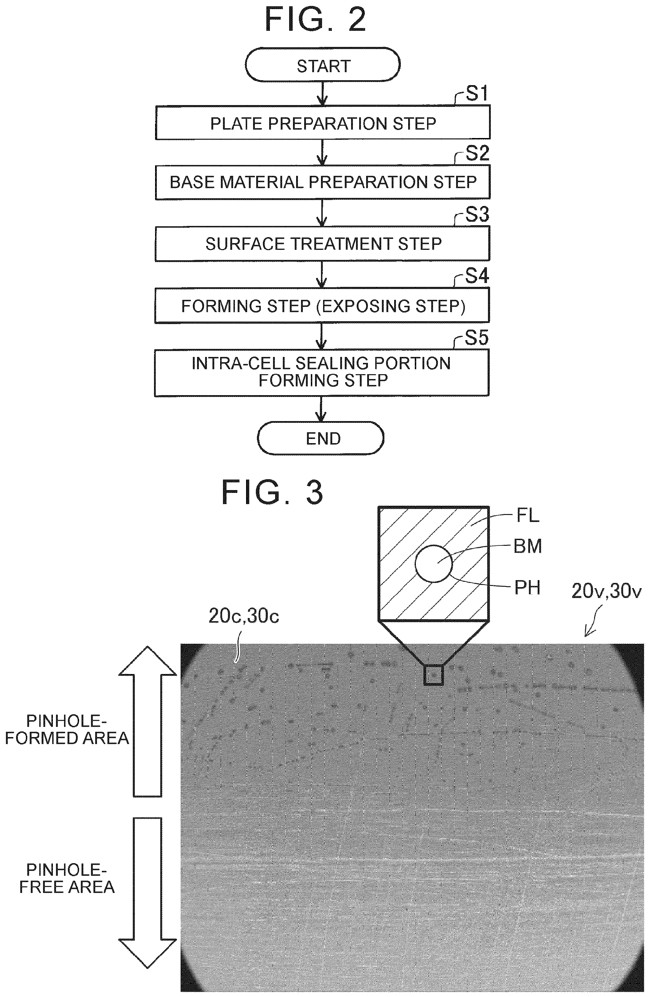

FIG. 2 is a flowchart showing a method for manufacturing the fuel cell 100. Each of the separators 20, 30 is manufactured by, for example, cutting a roll-shaped base material BM and forming it into a predetermined shape by pressing. Therefore, when the surface of the base material BM is treated after the pressing, it is necessary to individually perform surface treatment on each cut piece of the base material BM, which results in an increase in manufacturing cost. On the other hand, when the surface of the base material BM is treated before the pressing, the surface of the roll-shaped base material BM can be treated all at once, which can reduce the manufacturing cost. Therefore, in the present embodiment, each of the separators 20, 30 is manufactured by the following method.

In step S1, a plate preparation step is performed in which the plate member 10 is prepared. In step S2, a base material preparation step is performed in which the base material BM is prepared. In step S3, a surface treatment step is performed in which the surface of the base material BM is treated to form the coating FL on the surface of the base material BM. In step S4, a forming step is performed in which the base material BM having the coating FL on its surface is pressed to form each of the anode separator 20 and the cathode separator 30 into a predetermined shape. In step S5, an intra-cell sealing portion forming step is performed in which the intra-cell sealing portions 26a to 26e, 36a to 36e are formed. In the intra-cell sealing portion forming step, the plate member 10 is sandwiched between the anode separator 20 and the cathode separator 30, and predetermined sealing positions SP of the insulating sheet 12 are bonded to the bodies 21, 31. At this time, the separators 20, 30 may be bonded to the insulating sheet 12 by pressure or by an adhesive.

In order to allow the sacrificial electrolytic corrosion portions 28, 38 located in the coolant inlet areas IA and the sacrificial electrolytic corrosion portions 29, 39 located in the coolant outlet areas OA to be preferentially electrolytically corroded over the remaining portions even in the separators 20, 30 having their surfaces covered with the coating FL, the present inventors arrived at the following idea. The present inventors conceived the idea of intentionally exposing the portions of the base material BM corresponding to the coolant inlet areas IA and the coolant outlet areas OA of the cooling surfaces 20c, 30c of the separators 20, 30, namely corresponding to the areas where the sacrificial electrolytic corrosion portions 28, 29, 38, 39 are to be formed, by not performing surface treatment on these portions of the base material BM. In the above surface treatment step, the present inventors attached mask members to the portions of the base material BM corresponding the coolant inlet areas IA and the coolant outlet areas OA, thereby masking these portions of the base material BM. In this state, the present inventors treated the surface of the base material BM to produce separators, not shown, in which the coolant inlet areas IA and the coolant outlet areas OA are not covered with the coating FL while the remaining portions are covered with the coating FL. In the separators manufactured in this manner, electrolytic corrosion occurred sequentially from the coolant manifolds 42, 45 toward the intra-cell sealing portions 26a, 26b, 36a, 36b. The intra-cell sealing portions 26a, 26b, 36a, 36b were thus able to be protected. However, it was found that, in this manufacturing method using mask members, not only does it take time to detach the mask members from the separators, but it is also necessary to periodically remove the coating FL adhering to the mask members, which increases the manufacturing cost of the separators. Therefore, in order to reduce the manufacturing cost, the present inventors manufactured the following separators 20v, 30v as a reference example by uniformly treating the entire surface of the base material BM without masking the portions of the base material BM corresponding to the coolant inlet areas IA and the coolant outlet areas OA.

FIG. 3 shows the observation results of the cooling surfaces 20c, 30c of the separators 20v, 30v as a reference example. The coolant inlet areas IA and the coolant outlet areas OA are covered with the coating FL. Therefore, a sufficient anti-corrosion current is not generated in the coolant inlet areas IA and the coolant outlet areas OA. Moreover, when pressing is performed, the base material BM is stretched because an external force is applied to the separators 20v, 30v. Accordingly, slip occurs along the grain boundaries of the base material BM, which increases the surface area of the base material BM. The coating FL is thus stretched. As a result, part of the coating FL may be ruptured, and the base material BM may be partially exposed. Therefore, the separators 20v, 30v are not electrolytically corroded sequentially from the coolant manifolds 42, 45 toward the intra-cell sealing portions 26a, 26b, 36a, 36b. Instead, the portions where the coating FL has ruptured are electrolytically corroded in a concentrated manner. Therefore, if the coating FL covering the intra-cell sealing portions 26a, 26b, 36a, 36b ruptures, electrolytic corrosion will progress from the portions where the coating FL has ruptured. As a result, pinholes PH may be formed in the intra-cell sealing portions 26a, 26b, 36a, 36b, which results in degradation in sealing performance. In fact, multiple pinholes PH were observed on the cooling surfaces 20c, 30c of the separators 20v, 30v of the reference example. Therefore, a technique is desired that can reduce formation of pinholes PH in the intra-cell sealing portions 26a, 26b, 36a, 36b when the base material BM having its surface covered with the coating FL is pressed. In view of the above, the present inventors have conceived the following manufacturing method that can reduce formation of pinholes PH in the intra-cell sealing portions 26a, 26b, 36a, 36b by using the external force applied by pressing.

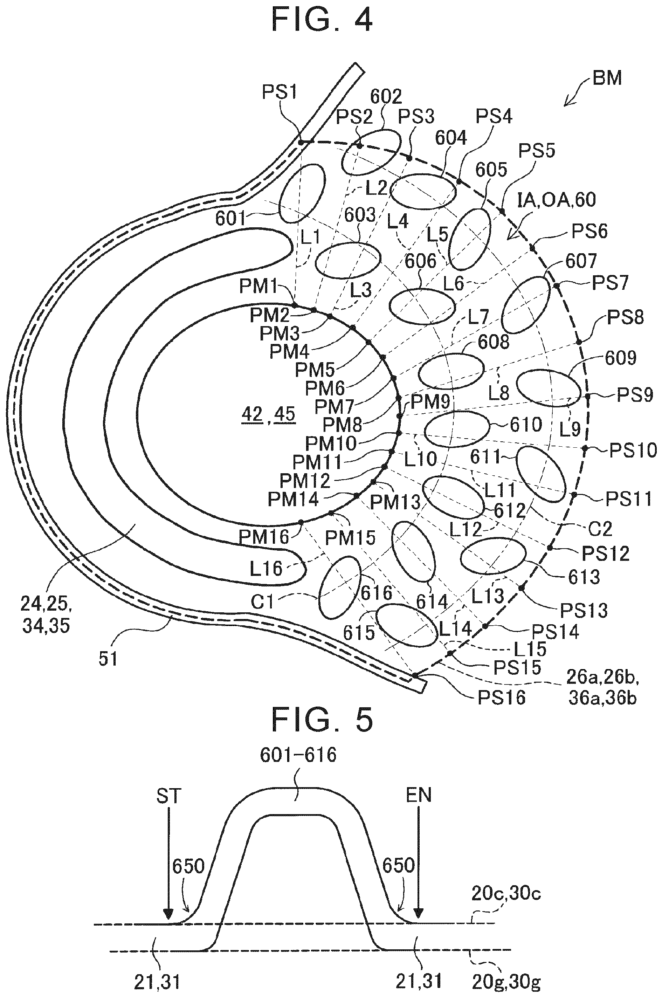

FIG. 4 shows a detailed configuration of the base material BM. FIG. 4 schematically shows the coolant inlet area IA and the coolant outlet area OA of the base material BM as viewed from the cooling surface 20c, 30c side. In the above substrate preparation step, the present inventors prepared the base material BM including the bodies 21, 31, the coolant manifolds 42, 45, the first gasket 51, the ribs 24, 25, 34, 35, the intra-cell sealing portions 26a, 26b, 36a, 36b, and an embossed portion 60.

The embossed portion 60 is disposed at each of the positions where the sacrificial electrolytic corrosion portions 28, 29, 38, 39 are to be formed, that is, near each of the coolant manifolds 42, 45. Specifically, the embossed portion 60 is disposed between the coolant inlet manifold 42 and each of the intra-cell sealing portions 26a, 36a and between the coolant outlet manifold 45 and each of the intra-cell sealing portions 26b, 36b. Each embossed portion 60 has a plurality of protrusions 601 to 616 protruding from the body 21 or 31. Specifically, each embossed portion 60 has at least one protrusion 601 to 616 on each of straight lines L1 to L16 connecting arbitrary points PM1 to PM16 on the coolant manifold 42 or 45 with arbitrary points PS1 to PS16 on the intra-cell sealing portion 26a, 26b, 36a, or 36b. In the present embodiment, each embossed portion 60 has the protrusions 601 to 616 on two or more concentric circles C1, C2 centered around the coolant manifold 42 or 45. The protrusions 601 to 616 have, for example, an elliptical shape.

FIG. 5 shows a detailed configuration of the protrusions 601 to 616. Connection portions 650 between each of the protrusions 601 to 616 and the body 21 or 31 have a predetermined radius of curvature. In other words, each of the protrusions 601 to 616 has a shape with a predetermined elongation rate or more between the starting point ST and the end point EN of that protrusion.

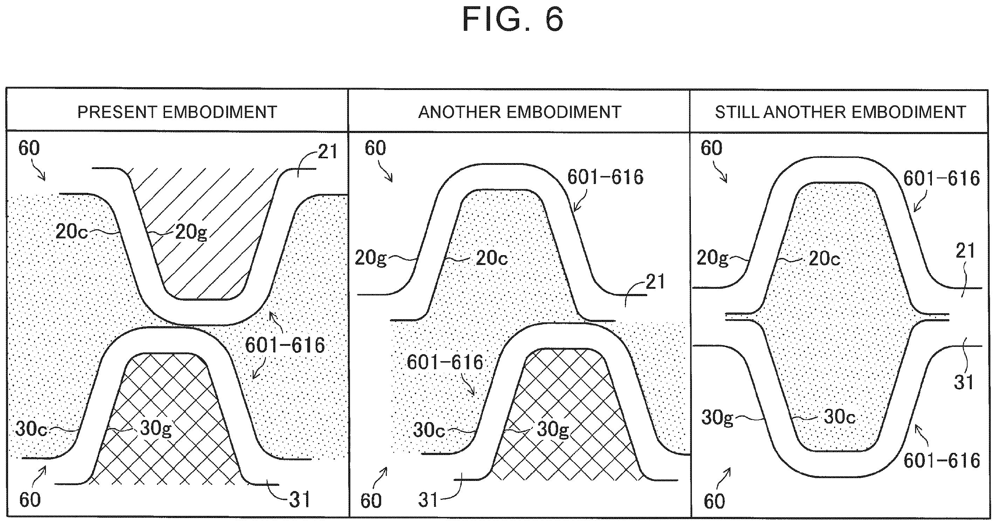

FIG. 6 shows protruding directions of the protrusions 601 to 616. As shown in the left part of FIG. 6, in the present embodiment, the protrusions 601 to 616 of both the anode separator 20 and the cathode separator 30 protrude from the gas surfaces 20g, 30g toward the cooling surfaces 20c, 30c of the bodies 21, 31. As shown in the middle and right parts of FIG. 6, the protrusions 601 to 616 of at least one of the anode separator 20 and the cathode separator 30 may protrude from the cooling surfaces 20c, 30c toward the gas surfaces 20g, 30g of the bodies 21, 31.

Next, the present inventors stretched the protrusions 601 to 616 by using the external force applied by the pressing in the above forming step, and thus intentionally ruptured the coating FL on the protrusions 601 to 616. In this way, the present inventors manufactured the separators 20, 30 including the sacrificial electrolytic corrosion portions 28, 29, 38, 39 each having a plurality of exposed portions 280, 290, 380, 390 in which the base material BM is exposed without being covered with the coating FL, as shown in FIG. 1. In the separators 20, 30 manufactured in this manner, more exposed portions 280, 290, 380, 390 were able to be formed in the sacrificial electrolytic corrosion portions 28, 29, 38, 39, compared to a case where the base material BM that does not have the embossed portions 60 is used. In other words, the separators 20, 30 were able to be manufactured in which the sacrificial electrolytic corrosion portions 28, 29, 38, 39 have more exposed portions 280, 290, 380, 390 than the remaining portions. As electrolytic corrosion progressed from each of the exposed portions 280, 290, 380, 390, the sacrificial electrolytic corrosion portions 28, 29, 38, 39 were electrolytically corroded so as to be widely dissolved over their entire areas. As a result, an anti-corrosion current is generated in the coolant inlet areas IA and the coolant outlet areas OA. The sacrificial electrolytic corrosion portions 28, 29, 38, 39 were thus preferentially electrolytically corroded as sacrificial materials over the remaining portions. The intra-cell sealing portions 26a, 26b, 36a, 36b were able to be protected in this manner.

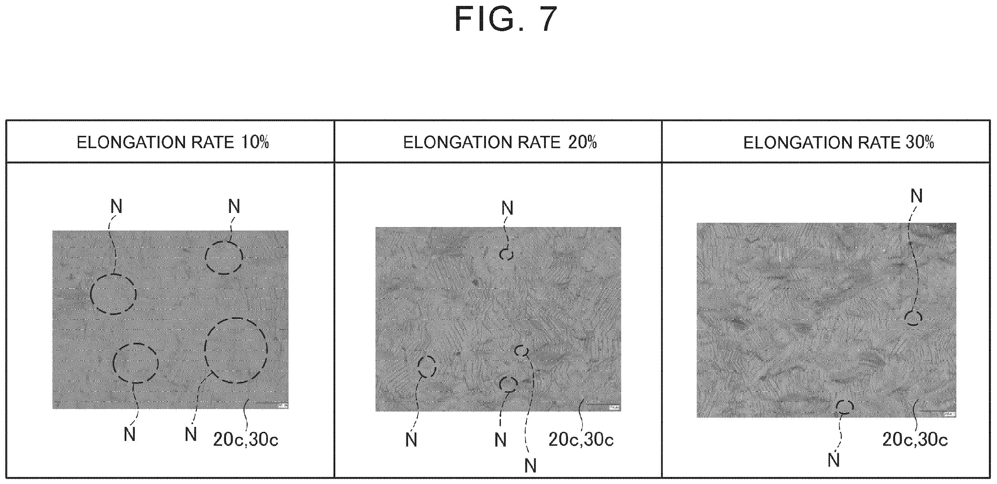

FIG. 7 shows the verification results of the intervals at which the exposed portions 280, 290, 380, 390 were formed in the sacrificial electrolytic corrosion portions 28, 29, 38, 39. In the verification shown in FIG. 7, the exposed portions 280, 290, 380, 390 in the sacrificial electrolytic corrosion portions 28, 29, 38, 39 were reproduced by first forming a coating FL of titanium and carbon on a stainless steel foil serving as the base material BM through vacuum deposition, and then stretching the base material BM at a specific elongation ratio. FIG. 7 shows the observation results of the sacrificial electrolytic corrosion portions 28, 29, 38, 39 reproduced in this manner. In each image in FIG. 7, the black stripes correspond to the exposed portions 280, 290, 380, 390. The portions N, each enclosed by a dashed line, are the areas in the sacrificial electrolytic corrosion portions 28, 29, 38, 39 that do not have the exposed portions 280, 290, 380, 390.

As shown in the left part of FIG. 7, when the elongation rate was 10%, the intervals at which the exposed portions 280, 290, 380, 390 were formed in the sacrificial electrolytic corrosion portions 28, 29, 38, 39 were about 30 µm. As shown in the middle part of FIG. 7, when the elongation rate was 20%, the intervals at which the exposed portions 280, 290, 380, 390 were formed in the sacrificial electrolytic corrosion portions 28, 29, 38, 39 were about 10 µm. As shown in the right part of FIG. 7, when the elongation rate was 30%, the intervals at which the exposed portions 280, 290, 380, 390 were formed in the sacrificial electrolytic corrosion portions 28, 29, 38, 39 were about 5 µm. Although a certain effect was achieved at any interval, a particularly remarkable effect was achieved when the sacrificial electrolytic corrosion portions 28, 29, 38, 39 had the exposed portions 280, 290, 380, 390 at intervals of 10 µm or less.

According to the above embodiment, the separators 20, 30 can be manufactured using the base material BM having its surface covered with the coating FL and including, between the coolant inlet manifold 42 and each of the intra-cell sealing portions 26a, 36a and between the coolant outlet manifold 45 and each of the intra-cell sealing portions 26b, 36b, the embossed portions 60 each having the protrusions 601 to 616. In this case, when the separators 20, 30 are formed by pressing the base material BM having its surface covered with the coating FL, the protrusions 601 to 616 formed on the base material BM can be stretched by using the external force applied by the pressing. As a result, the coating FL on the protrusions 601 to 616 is ruptured. The sacrificial electrolytic corrosion portions 28, 29, 38, 39 having the exposed portions 280, 290, 380, 390 can thus be formed between the coolant inlet manifold 42 and each of the intra-cell sealing portions 26a, 36a and between the coolant outlet manifold 45 and each of the intra-cell sealing portions 26b, 36b. That is, the forming step includes an exposing step of forming the exposed portions 280, 290, 380, 390 of the sacrificial electrolytic corrosion portions 28, 29, 38, 393 at the positions corresponding to the protrusions 601 to 616 of the embossed portions 60. In this way, more exposed portions 280, 290, 380, 390 can be formed in the sacrificial electrolytic corrosion portions 28, 29, 38, 39, compared to the case where the base material BM that does not have the embossed portions 60 is used. As described above, since the sacrificial electrolytic corrosion portions 28, 29, 38, 39 have more exposed portions 280, 290, 380, 390 than the remaining portions, the sacrificial electrolytic corrosion portions 28, 29, 38, 39 can be preferentially electrolytically corroded over the remaining portions. This can reduce formation of the pinholes PH in the intra-cell sealing portions 26a, 26b, 36a, 36b. As a result, degradation in sealing performance can be reduced.

According to the above embodiment, each embossed portion 60 has at least one protrusion 601 to 616 on each of the straight lines L1 to L16 connecting the coolant inlet manifold 42 with the intra-cell sealing portion 26a or 36a or connecting the coolant outlet manifold 45 with the intra-cell sealing portion 26b or 36b. It is therefore possible to form the sacrificial electrolytic corrosion portions 28, 29, 38, 39 each having at least one exposed portion 280, 290, 380, 390 on each of the straight lines L1 to L16 connecting the coolant inlet manifold 42 with the intra-cell sealing portion 26a or 36a or connecting the coolant outlet manifold 45 with the intra-cell sealing portion 26b or 36b. With this configuration, the coolant passes over the exposed portions 280, 290, 380, 390 between each of the coolant manifolds 42, 45 and the coolant channel 49 at least once. This more reliably allows the sacrificial electrolytic corrosion portions 28, 29, 38, 39 to be preferentially electrolytically corroded over the remaining portions. As a result, formation of the pinholes PH in the intra-cell sealing portions 26a, 26b, 36a, 36b can be more reliably reduced, and therefore, degradation in sealing performance can further be reduced.

According to the above embodiment, each embossed portion 60 has the protrusions 601 to 616 on the two or more concentric circles C1, C2 centered around a corresponding one of the coolant manifolds 42, 45. It is therefore possible to form the sacrificial electrolytic corrosion portions 28, 29, 38, 39 each having the exposed portions 280, 290, 380, 390 on the two or more concentric circles C1, C2 centered around the coolant manifold 42 or 45. This configuration increases the probability that the coolant passes over the exposed portions 280, 290, 380, 390 between each of the coolant manifolds 42, 45 and the coolant channel 49. This more reliably allows the sacrificial electrolytic corrosion portions 28, 29, 38, 39 to be preferentially electrolytically corroded over the remaining portions. As a result, formation of the pinholes PH in the intra-cell sealing portions 26a, 26b, 36a, 36b can be more reliably reduced, and therefore, degradation in sealing performance can further be reduced.

According to the above embodiment, each embossed portion 60 has the protrusions 601 to 616 at intervals of 10 µm or less. It is therefore possible to form the sacrificial electrolytic corrosion portions 28, 29, 38, 39 each having the exposed portions 280, 290, 380, 390 at intervals of 10 µm or less. This configuration increases the probability that the coolant passes over the exposed portions 280, 290, 380, 390 between each of the coolant manifolds 42, 45 and the coolant channel 49. This more reliably allows the sacrificial electrolytic corrosion portions 28, 29, 38, 39 to be preferentially electrolytically corroded over the remaining portions. As a result, formation of the pinholes PH in the intra-cell sealing portions 26a, 26b, 36a, 36b can be more reliably reduced, and therefore, degradation in sealing performance can further be reduced.

According to the above embodiment, the coolant channel 49 is formed between the cooling surface 20c of the anode separator 20 of one of the adjacent fuel cells 100 and the cooling surface 30c of the cathode separator 30 of the other fuel cell 100. In the coolant channel 49, the coolant inlet areas IA located between the coolant inlet manifold 42 and each of the intra-cell sealing portions 26a, 36a and the coolant outlet areas OA located between the coolant outlet manifold 45 and each of the intra-cell sealing portions 26b, 36b have a greater coolant flow rate per unit area of the fuel cell 100 than the remaining areas. Therefore, the contribution of pressure loss that occurs when the coolant flows in the coolant inlet areas IA and the coolant outlet areas OA is greater compared to the other areas. In order to reduce the pressure loss in the coolant inlet areas IA and the coolant outlet areas OA, it is desirable that the protrusions 601 to 616 in each embossed portion 60 protrude in a direction that can increase the space between the anode separator 20 of one of the adjacent fuel cells 100 and the cathode separator 30 of the other fuel cell 100. According to the above embodiment, as shown in the left part of FIG. 6, the protrusions 601 to 616 of both the anode separator 20 and the cathode separator 30 protrude from the gas surfaces 20g, 30g toward the cooling surfaces 20c, 30c, namely from the surfaces of the bodies 21, 31 that face the insulating sheet 12 toward the opposite surfaces of the bodies 21, 31 from the surfaces that face the insulating sheet 12. This configuration can increase the space between the anode separator 20 of one of the adjacent fuel cells 100 and the cathode separator 30 of the other fuel cell 100, compared to the configurations shown in the middle and right parts of FIG. 6. In other words, this configuration can reduce the space between each of the separators 20, 30 and the insulating sheet 12. As a result, pressure loss in the coolant inlet areas IA and the pressure outlet areas OA can be reduced.

According to the above embodiment, as shown in FIG. 4, the protrusions 601 to 616 have an elliptical shape. Therefore, even if the fuel cells 100 are misaligned when stacked, the protrusions 601 to 616 of the anode separator 20 of one fuel cell 100 are more likely to overlap the protrusions 601 to 606 of the cathode separator 30 of the adjacent fuel cell 100. This reduces the possibility that the fuel cells 100 may float in the coolant inlet areas IA and the coolant outlet areas OA. The protrusions 601 to 616 may have a perfect circular shape.

The present disclosure is not limited to the above embodiment, and can be implemented with various configurations without departing from the spirit and scope of the present disclosure. For example, the technical features of the embodiment corresponding to the technical features in each aspect described in the section "SUMMARY OF THE INVENTION" may be replaced or combined as appropriate in order to solve part or all of the issues described above or to achieve part or all of the effects described above. When the technical features are not described as essential in this specification, such technical features can be omitted as appropriate.

## Claims

1. A fuel cell comprising:
a plate member including a membrane electrode gas diffusion layer assembly and an insulating sheet that holds an outer peripheral portion of the membrane electrode gas diffusion layer assembly; and
an anode separator and a cathode separator that sandwich the plate member, the anode separator including a coating on a surface of the anode separator, and the cathode separator including a coating on a surface of the cathode separator; wherein:
each of the anode separator and the cathode separator includes
a body,
a coolant manifold that is an opening in the body, the coolant manifold being configured to allow a coolant to flow through the coolant manifold,
an intra-cell sealing portion that provides a seal between the anode separator and the cathode separator within the fuel cell, the intra-cell sealing portion being provided by the body being bonded to the insulating sheet so as to surround the coolant manifold, and
a sacrificial electrolytic corrosion portion disposed between the coolant manifold and the intra-cell sealing portion, the sacrificial electrolytic corrosion portion including a plurality of exposed portions where a base material is exposed without being covered with the coating; and
the sacrificial electrolytic corrosion portion includes at least one of the exposed portions on a straight line connecting the coolant manifold and the intra-cell sealing portion.

2. The fuel cell according to claim 1, wherein the sacrificial electrolytic corrosion portion includes the exposed portion on each of two or more concentric circles centered around the coolant manifold.

3. The fuel cell according to claim 1, wherein the sacrificial electrolytic corrosion portion includes the exposed portions at an interval of 10 µm or less.

4. A method for manufacturing a fuel cell, the method comprising:
a plate preparation step of preparing a plate member including (1a) a membrane electrode gas diffusion layer assembly and (1b) an insulating sheet that holds an outer peripheral portion of the membrane electrode gas diffusion layer assembly;
a base material preparation step of preparing a base material for an anode separator and a cathode separator, the base material including (2a) a body, (2b) a coolant manifold that is an opening in the body, the coolant manifold being configured to allow a coolant to flow through the coolant manifold, and (2c) an embossed portion disposed near the coolant manifold, the embossed portion including a plurality of protrusions protruding from the body;
a surface treatment step of treating a surface of the base material to form a coating on the surface of the base material;
a forming step of pressing on the base material with the coating to form each of the anode separator and the cathode separator into a predetermined shape; and
an intra-cell sealing portion forming step of forming an intra-cell sealing portion by sandwiching the plate member between the anode separator and the cathode separator and bonding the insulating sheet to the body so as to surround the coolant manifold, the intra-cell sealing portion providing a seal between the anode separator and the cathode separator within the fuel cell,
wherein the forming step includes an exposing step of forming a sacrificial electrolytic corrosion portion by stretching the protrusions using an external force applied by the pressing to rupture the coating on the protrusions, the sacrificial electrolytic corrosion portion including a plurality of exposed portions where the base material is exposed without being covered with the coating.

5. The method according to claim 4, wherein the protrusion protrudes from a surface of the body that faces the insulating sheet toward an opposite surface of the body from the surface that faces the insulating sheet.
